# EUROPEAN PATENT APPLICATION

(11) **EP 4 506 086 A2**
(43) Date of publication of application: **12.02.2025**
(21) Application number: 24193391.0
(22) Date of filing: 07.08.2024
(51) Int. Cl.: B22F 7/08, B22F 10/25, B22F 10/28, B23K 26/342, B33Y 10/00, B33Y 80/00, B23K 15/00, B22F 7/06, B22F 12/30

(54) **DUAL-MATERIAL COMPONENTS AND METHODS OF MAKING THEREFOR**

(30) Priority: 07.08.2023 US 202318231148
(71) Applicant: ROSEMOUNT AEROSPACE INC., Burnsville, MN 55306-4898 (US)
(72) Inventor: GILB, Andrew, New Prague, 56071 (US); PITERA, Rudy L., Woodbury, 55125 (US); WIGEN, Scott J., Eagan, 55123 (US); BARKER, Aaron M., Hopkins, 55343 (US)
(74) Representative: Dehns

(57) **Abstract**

In accordance with at least one aspect of this disclosure, a system can include, a housing assembly and an element assembly having a dual-material component therein, the element assembly joined within the housing assembly via a weld joint at a weld interface between the dual material component and the housing assembly.

## Description

### TECHNICAL FIELD

The present disclosure relates to dual-material components and methods of making dual-material components.

### BACKGROUND

Material selection is very important for design performance of certain components. Whether required for thermal management, structural robustness, or corrosive resistance, using the best material is imperative. This can, however, cause difficulties when trying to join components of dissimilar metals into assemblies, especially when one metal joining technique is preferred. In certain applications, for example, it is greatly beneficial for a component to be of a material well-suited for a given purpose, but due to build parameters in the larger assembly, that material may not be well-suited for joining to the assembly because dissimilar metals can create a tricky and inconsistent quality of weld.

The conventional techniques have been considered satisfactory for their intended purpose. However, there is an ever present need for improved systems and methods for making components that address the above noted concerns. This disclosure provides a solution for this need.

### SUMMARY

In accordance with at least one aspect of this disclosure, a method includes additively manufacturing a component from a first material onto a baseplate manufactured of a second material to form a dual-material component for use in an assembly. The first material can be configured to manage heat within the assembly and the second material can be configured to form a weld j oint between the base plate of the dual-material component and the assembly for joining the dual-material component to the assembly.

In embodiments, the method can further include machining the base plate to a predetermined geometry corresponding to a component seat within the assembly. The method can further include, installing the dual-material component into the component seat of the assembly, and welding the base plate of the dual-material component to the assembly at the weld interface to form a weld j oint to secure the dual-material component to the assembly. In embodiments, the method can include manufacturing the base plate from the second material.

In certain embodiments, the method can also include manufacturing a build plate configured to hold one or more base plates and installing the one or more base plates into the build plate. In certain such embodiments, manufacturing the build plate can further include forming a plurality of base plate recesses in the build plate and forming a respective build plate bore in each base plate recess of the plurality of base plate recesses. In such embodiments, manufacturing the base plate can further include forming a respective base plate bore in each base plate.

In embodiments, the one or more base plates can include a plurality of base plates, and installing the plurality of base plates into the build plate can include, placing a respective base plate into a respective base plate recess, and securing each respective base plate to the build plate in the respective base plate recess with a respective fastener extending through the respective base plate bore and into the respective build plate bore.

In embodiments, the method can include additively manufacturing a plurality of components of the first material onto each to the respective base plates to manufacture a plurality of dual-material components on the same build plate.

In embodiments, the first material can be different from the second material, and the second material can be the same as a material of the assembly at the weld interface. In embodiments, the first material can have a higher thermal conductivity than the second material. In certain embodiments, the first material can be nickel, the second material can be stainless steel, and the material of the assembly at the weld interface can be stainless steel.

In accordance with at least one aspect of this disclosure, a method can include additively manufacturing a component from a first material, and cladding a base portion of a second material onto the component to form a dual-material component for use in an assembly. In embodiments, the first material can be configured to manage heat within the assembly and the second material can be configured to form a weld joint between the base portion of the component and the assembly for joining the component to the assembly.

In embodiments, cladding the base portion onto the component can include applying with a cladding nozzle, the second material to the first material to grow the base portion from the component to manufacture the dual-material component.

The method can further include, machining the base portion to a predetermined geometry corresponding to a component seat within the assembly. In embodiments, the method can include, installing the component into the component seat of the assembly, and welding the base plate of the component to the assembly at the weld interface to form a weld j oint to secure the component to the assembly.

In embodiments, the first material can be different from the second material, and the second material can be different than a material of the assembly at the weld interface and configured to form a compatible alloy system at the weld interface. In embodiments, the first material can have a higher thermal conductivity than the second material.

In certain embodiments, the first material can be nickel, the second material can be Inconel, and the material of the assembly at the weld interface can be stainless steel.

In accordance with at least one aspect of this disclosure, a system can include, a housing assembly and an element assembly having a dual-material component therein, the element assembly joined within the housing assembly via a weld joint at a weld interface between the dual material component and the housing assembly.

In embodiments, the dual-material component can include an additively manufactured component portion and a base portion, wherein the additively manufactured component portion is additively manufactured of a first material configured to manage heat within the housing assembly, and wherein the base portion is manufactured of a second material, different than the first material and compatible for welding with a material of the housing assembly. In embodiments, the first material can have a higher thermal conductivity than the second material.

In certain embodiments, the additively manufactured component portion can be of nickel, the base portion can be of stainless steel, and wherein the housing assembly can be of stainless steel.

In certain embodiments, the additively manufactured component portion can be of nickel, the base portion can be of Inconel, and the housing assembly can be of stainless steel.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, other embodiments thereof will be described in detail herein below with reference to certain figures, wherein:
Fig. 1 is a perspective view of a system in accordance with this disclosure, showing an embodiment of a housing assembly;
Fig. 2 is a cross sectional view of the system of Fig. 1, showing an element assembly within the housing assembly, the element assembly including a component;
Fig. 3 is a perspective view of the component of Fig 2;
Fig. 4 is a schematic view of a method of making an embodiment of the component of Fig. 3, showing an additive manufacturing process;
Fig. 5 is a schematic view of a method of making an embodiment of the component of Fig. 3, showing a machining process;
Fig. 6 is an elevational view of the embodiment of the component made by the processes of Figs. 4 and 5;
Fig. 7 is a schematic view of a method of installation of the component into the housing assembly;
Figs. 8-11 show a schematic view of a method of making a plurality of the components of Fig. 3;
Fig. 12 is a schematic view of a method of making an embodiment of the component of Fig. 3;
Fig. 13 is a schematic view of a method of making an embodiment of the component of Fig. 3, showing a machining process;
Fig. 14 is an elevational view of the embodiment of the component made by the processes of Figs. 12 and 13; and
Fig. 15 is a schematic view of a method of installation of the component into the housing assembly.

### DETAILED DESCRIPTION

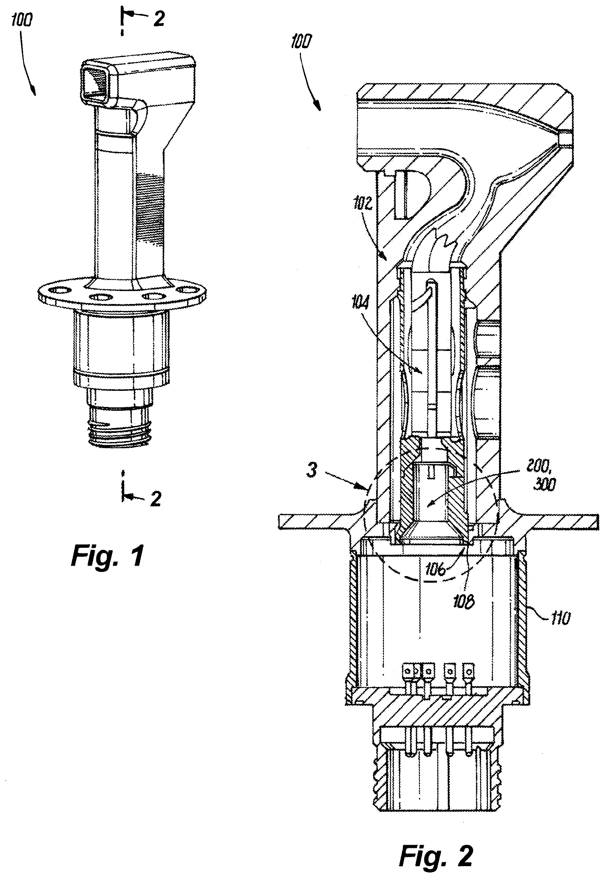

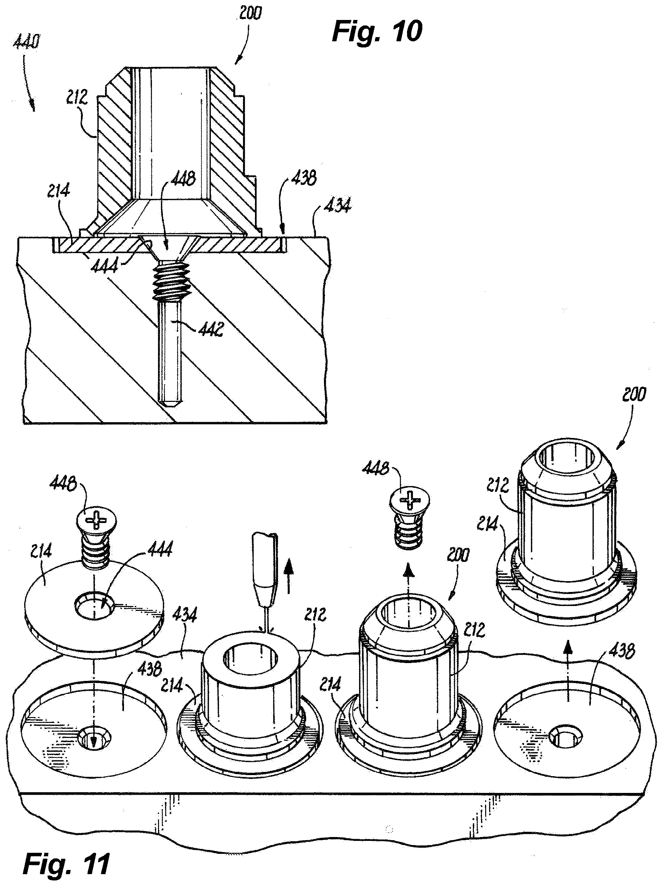

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-15.

In accordance with at least one aspect of this disclosure, as shown in Figs. 1 and 2, a system 100 (e.g., a system for air data sensing) can include, a housing assembly 102 and an element assembly 104. The element assembly 104 can include a dual-material component 200, 300 therein. During installation of the element assembly 104 to the housing assembly 102, the element assembly 104 can be joined to and within the housing assembly 102 via a weld joint 106 at a weld interface 108 between the dual-material component 200, 300 and the housing assembly 102. The system 100 can also include a base assembly 110, where the base assembly 110 is installed to the housing assembly 102 after the element assembly 104 is welded to the housing assembly 102 via the dual-material component 200, 300.

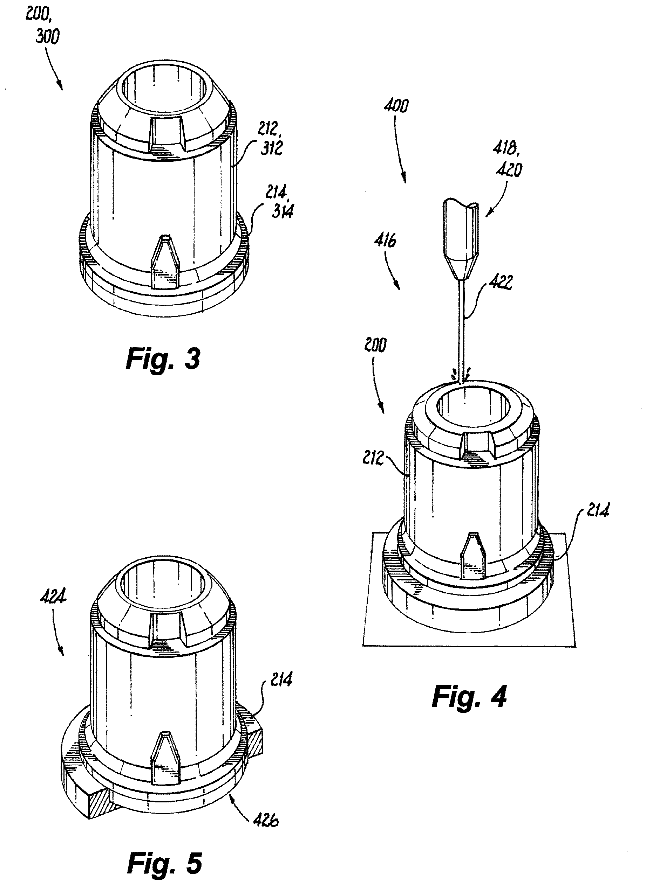

In embodiments, such as shown in Fig. 3, the dual-material component can include an additively manufactured component portion 212, 312 and a base portion 214, 314, wherein the additively manufactured component portion 212, 312 is additively manufactured from a first material configured to manage heat within the housing assembly 102, and the base portion 214, 314 is manufactured from a second material, different than the first material. The second material can be a material compatible for welding with a material of the housing assembly 102. In certain applications, the first material may not be compatible for welding with the material of the housing assembly 102.

For example, in certain applications, the component portion 212, 312 may require certain metal properties of a material that is not necessarily compatible with the housing assembly 102. Therefore, the dual-material component 200, 300 can have the base portion 214, 314 be of a material compatible for welding with the housing assembly 102 to ensure both the component portion 212, 312 provides is desired properties but that the component 200, 300 as a whole can still be securely installed into the housing assembly 102. In certain embodiments, the metallic properties of the first and second materials can include, among other things: the first material can have a higher thermal conductivity than the second material. Material properties may also be selected to promote welding and brazing between components or transitioning between varying coefficients of thermal expansion.

In certain embodiments, the dual-material component 200 can be a nickel-stainless steel component, where the additively manufactured component portion 212 is of nickel (e.g., nickel 200) and the base portion 214 is of stainless steel such that the base portion 214 provides a similar metal for welding to the housing assembly 102, which is of stainless steel, in embodiments. A method 400 of manufacturing the component 200 is described herein with respect to Figs. 4-11.

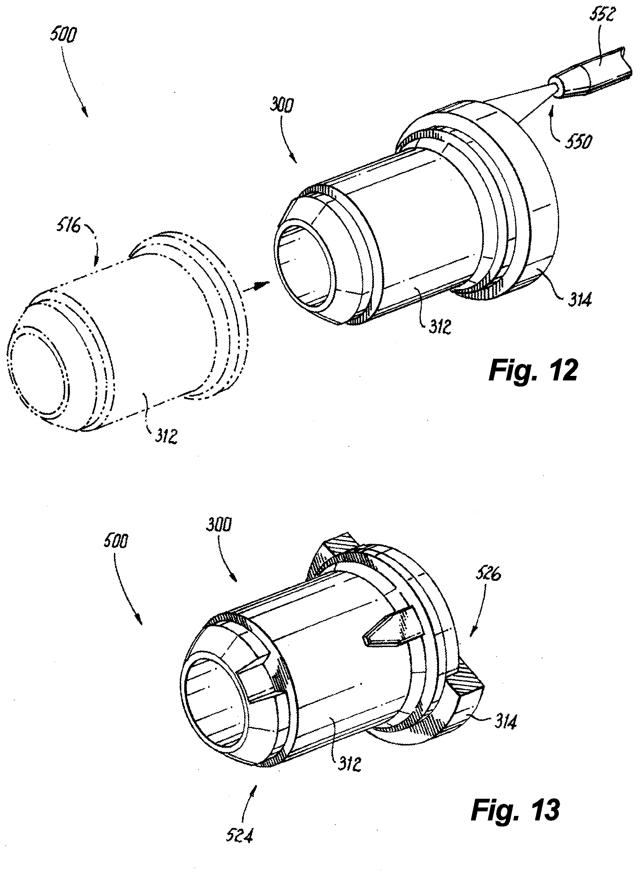

In certain embodiments, the dual-material component 300 can be a nickel-Inconel component, where the additively manufactured component portion 312 is of nickel (e.g., nickel 200) and the base portion 314 is of Inconel (e.g., Inconel 625), such that the base portion 214 provides a compatible metal for welding to the housing assembly 102, which is of stainless steel, in embodiments. The two dissimilar metals of stainless steel and Inconel 625 can be suitable for forming a compatible allow system at the weld interface. A method 500 of manufacturing the component 300 is described herein with respect to Figs. 12-15.

With reference now to Figs. 4-11, a method 400 of making a dual-material component (e.g., component 200) includes, additively manufacturing 416 the component portion 212 from the first material onto a baseplate (e.g., the base portion 214) manufactured from the second material. Additive manufacturing 416 can include additively manufacturing using an energy source 418 to fuse metallic powder on a powder bed (e.g., laser powder bed fusion as shown in Fig. 4.), or powder or wire ejected from a nozzle 420 with an energy beam 422 from the energy source (e.g., directed energy deposition shown in Fig. 12.). Any suitable additive manufacturing technique is contemplated herein as would be appreciated by those having ordinary skill in the art in view of this disclosure.

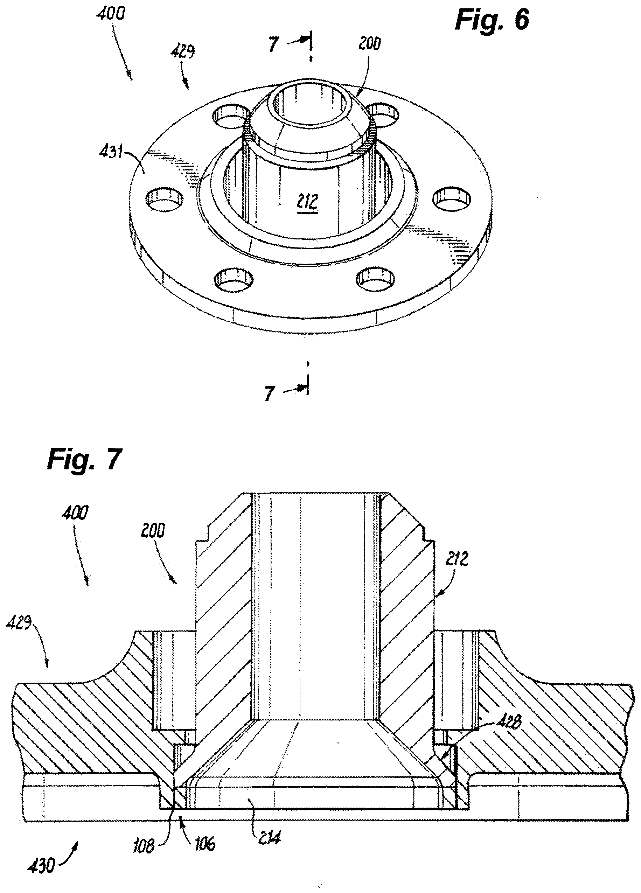

In embodiments, as shown in Fig. 5, the method 400 can further include machining 424 the base plate 214 to a predetermined geometry 426 corresponding to a component seat 428 within the housing assembly 102 (the component seat shown in Fig. 7 within a sensor base plate 431). After machining 424, the component 200 can take the form shown in Fig. 6, where the diameter of the baseplate 214 matches a diameter of the component portion 212. The method 400 can further include, as shown in Fig. 7, installing 429 the dual-material component 200 into the component seat 428 of the housing assembly 102, and welding 430 the base plate 214 of the dual-material component 200 to the housing assembly 102 at the weld interface 106 to form the weld joint 108 to secure the dual-material component 200 to the housing assembly 102. In embodiments, the method 400 can include separately manufacturing the base plate 214 from the second material, e.g., prior to additively manufacturing 416 the component portion 212 to the base plate 214.

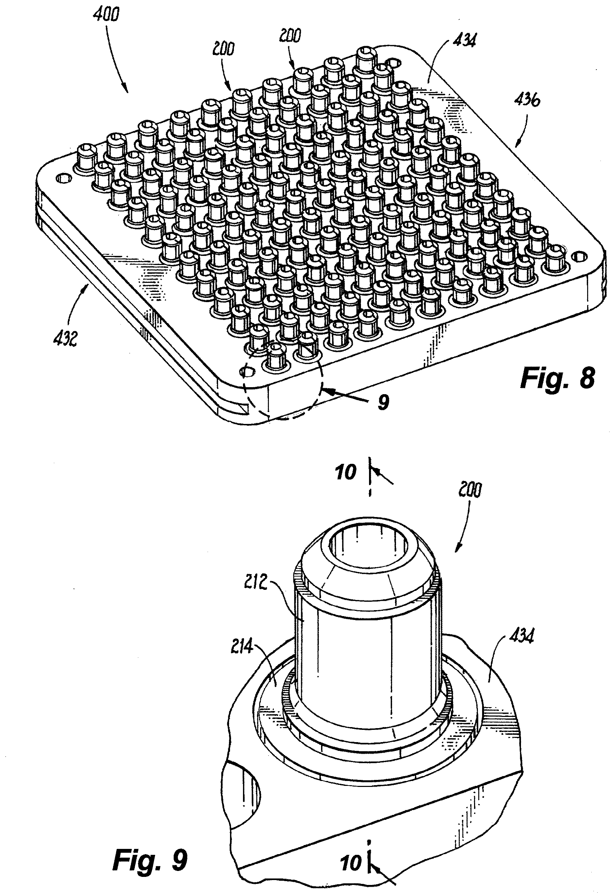

In certain embodiments, as shown in Figs. 8-11, the method 400 can include producing a plurality of components 200 at the same time. As shown, the method 400 can also include manufacturing 432 a build plate 434 configured to hold one or more base plates 214 and installing the one or more base plates 214 into the build plate 434. In certain such embodiments, manufacturing 432 the build plate can further include forming 436 a plurality of base plate recesses 438 in the build plate 434 and forming 440 a respective build plate bore 442 in each base plate recess 438 of the plurality of base plate recesses 438. In such embodiments, manufacturing the base plate 214 can further include forming a respective base plate bore 444 in each base plate 214.

In embodiments, the one or more base plates 214 can include a plurality of base plates 214, and the method 400 can further include installing 446 the plurality of base plates 214 into the build plate 434 can include, placing a respective base plate 214 into a respective base plate recess 438, and securing each respective base plate 214 to the build plate 434 in the respective base plate recess 438 with a respective fastener 448 extending through the respective base plate bore 444 and into the respective build plate bore 442. As such, the method 400 can include additively manufacturing a plurality of components 200 of the first material onto each of the respective base plates 214 to manufacture a plurality of dual-material components 200 on the same build plate 434.

Referring now to Figs. 12-15, a method 500 of manufacturing a dual-material component (e.g., component 300) can include, additively manufacturing 516 the component portion 312 from a first material. Additive manufacturing 516 can be similar to additive manufacture 416, but additive manufacturing 516 can be remote to the rest of the method 500 and the component portion 312 can be manufactured on a conventional build plate, for example. The method 500 further includes cladding/directed energy deposition 550 the base portion 314 onto the component portion 312 to form the dual-material component 300 for use in the housing assembly 102. In embodiments, cladding 550 the base portion 314 onto the component portion 312 can include applying with a cladding nozzle 552, the second material to the component portion 312 to grow the base portion 314 from the component portion 312 to manufacture the dual-material component 300.

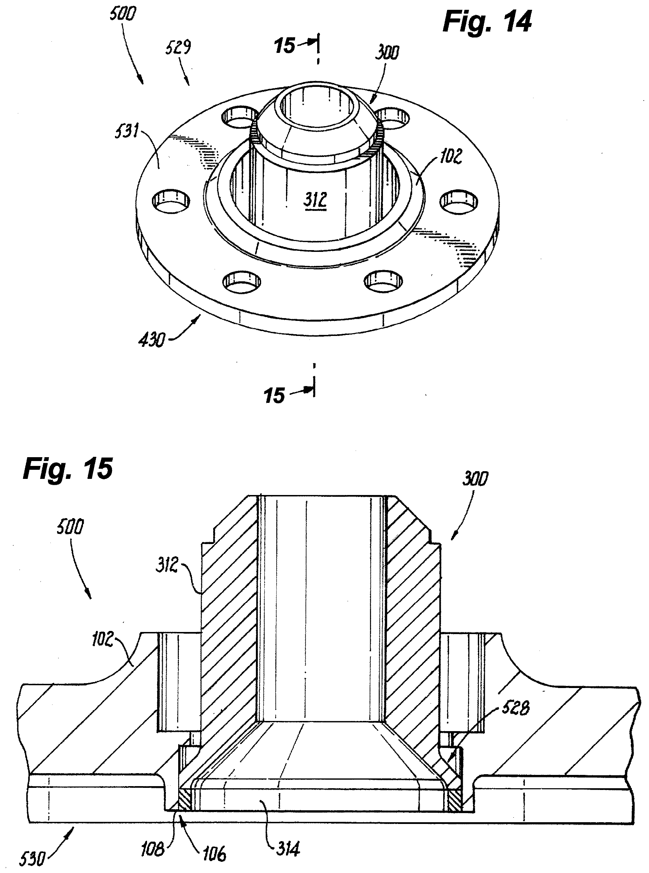

The method 500 can further include, as shown in Fig. 13, machining 524 the base portion 314 to a predetermined geometry 526 corresponding to a component seat 528 within the housing assembly 102 (the component seat shown in Fig. 15 within a sensor base plate 531). After machining 524, the component 300 can take the form shown in Fig. 14, where the diameter of the baseplate 314 matches a diameter of the component portion 312. In embodiments, as shown in Fig. 15, the method 500 can include, installing 529 the component 300 into the component seat 538 of the housing assembly 102, and welding 530 the base plate 314 of the component 300 to the housing assembly 102 at the weld interface 106 to form the weld joint 108 to secure the component 300 to the assembly 102.

Nickel 200 has proven to provide superior thermal management properties for given applications, for example in air data sensing systems. However that same nickel 200 component (e.g., component 200, 300) needs to be laser welded to another stainless steel component (e.g., in the housing assembly 102). Nickel 200 and stainless steel are dissimilar metals that create a tricky weld which can be susceptible to hot cracking. The dual material component 200, 300 however, provides one material for thermal management (e.g., in the component portion 212, 312) and one for weldability (e.g., the base portion 214, 314), overcoming the noted challenges.

As described herein, methods 400 and 500 can use additive manufacturing to create a dual material component 200, 300 with a material transition to stainless steel or Inconel at the weld interface (e.g., a weld flange) creating a component with the required thermal management qualities and a robust and consistent weld. The material of the component could be nickel and the weld interface (e.g., base portion 214, 314) could be stainless steel or Inconel. Both are described herein.

In certain embodiments, the dual material component 200 can be created using a stainless steel base material was attached to an additive manufacturing build plate. Then a nickel 200 component can be grown on top of the stainless steel base material. Next, the excess base material can be machined away creating the dual material component 200. This process is shown in Figs. 4-7. This component 200 can have all the thermal properties required to perform well in heat and has a weld flange (e.g., base portion 214) of similar metals so it can be assembled easily and of high quality. The best quality weld would be stainless-steel to stainless-steel, thus in this embodiment, the base portion weld flange can be stainless steel. Using certain additive manufacturing techniques, such as laser powder bed fusion, the nickel portion 212 of the component 200 is built in an inert environment and using a very precise set of laser welds. This produces a high quality weld with improved weld adhesion to the stainless steel build plate. However, traditionally, when laser welding an all nickel component to the assembly 102, it may not be possible to get the same weld quality without the inert environment and precise laser placement, especially the component is being laser welded by hand. Thus, as described herein, nickel 200 component portion is able to be built onto the stainless steel base plate and allows provides for the similar metals (stainless to stainless) during the more difficult weld of welding the component 200 to the assembly.

In certain embodiments of the additive manufacturing method 400, to streamline the manufacturing process, special build plates (e.g., build plate 434) can be used with stainless steel blanks (e.g., base plates 214) to act as the base material. Each potting well (component 200) can be printed onto a blank which will limit the amount of wasted blank material and make post process machining easier and more consistent. This streamlined process is shown in Figs. 8-11.

In certain embodiments, the dual material component 300 can be created using am Inconel base material to for the weld flange so that the laser weld would be Inconel to stainless-steel when the component 300 is installed into the assembly 102.

The method 500 for creating the component 300 using Inconel cladding can include first creating the main body of the component without the weld interface using any suitable method (e.g., additive manufacturing, casting). Next, Inconel material can be clad onto the main body and any excess cladded Inconel can be machined away. This can thus create the dual material potting well 300 that is of nickel 200 with an Inconel weld interface. This process is shown in Fig. 12-15.

Using any embodiment of the methods 400, 500 described herein, dual material components 200, 300 can be produced having materials that maximize design performance while also producing high quality and repeatable weld interfaces. This can improve overall quality and minimize scrap while also reducing the difficulty of manufacturing.

In practice, most of the heat generated in the system 100 (e.g., Figures 1 and 2) is at the scoop of the sensor. That heat then flows down the housing assembly 102, to the sensor baseplate 431, 531 and some of the heat is transferred to the element assembly 104. If the temperature sits for too long in element assembly 104 and specifically the potting well (e.g., component 200, 300), the electronics material within the inner diameter of the potting well can overheat and become damaged. Thus, embodiments allow for the element assembly to move the heat as fast as possible through that area of the assembly. Embodiments include nickel 200 for the component portion 213, 312, as it has good thermal conductivity, anti-corrosion properties, it can be welded to Inconel 625 (which, in embodiments, is what the flow duct (the structure surrounding the potting well) is made from. Nickel 200 can also be additively manufactured, which is advantageous for manufacturing the complex design of the component portion 212, 312. Stainless steel and Inconel 625 can produce a very robust and repeatable laser beam weld between those two materials and the sensor baseplate 431, 531). A very high quality weld is required for that joint as it acts as a hermetic seal.

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A method, comprising:
additively manufacturing a component (200, 300) from a first material onto a baseplate (214, 314) manufactured of a second material to form a dual-material component (200, 300) for use in an assembly, wherein the first material is configured to manage heat within the assembly and wherein the second material is configured to form a weld joint between the base plate of the dual-material component (200, 300) and the assembly for joining the dual-material component (200, 300) to the assembly.

2. The method of claim 1, further comprising, machining the base plate to a predetermined geometry corresponding to a component seat within the assembly.

3. The method of any preceding claim, further comprising:
installing the dual-material component (200, 300) into the component seat of the assembly; and
welding the base plate of the dual-material component (200, 300) to the assembly at the weld interface to form a weld joint to secure the dual-material component (200, 300) to the assembly.

4. The method of any preceding claim, further comprising, manufacturing the base plate from the second material.

5. The method of claim 4, further comprising, manufacturing a build plate configured to hold one or more base plates and installing the one or more base plates into the build plate.

6. The method of claim 5, wherein manufacturing the build plate further comprises:
forming a plurality of base plate recesses in the build plate; and
forming a respective build plate bore in each base plate recess of the plurality of base plate recesses, and wherein manufacturing the base plate further comprises;
forming a respective base plate bore in each base plate.

7. The method of claim 6, wherein the one or more base plates includes a plurality of base plates, wherein installing the plurality of base plates into the build plate further comprises,
placing a respective base plate into a respective base plate recess; and
securing each respective base plate to the build plate in the respective base plate recess with a respective fastener extending through the respective base plate bore and into the respective build plate bore, and optionally . further comprising, additively manufacturing a plurality of components of the first material onto each of the respective base plates to manufacture a plurality of dual-material components on the same build plate.

8. The method of any preceding claim, wherein the first material is different from the second material, and wherein the second material is the same as a material of the assembly at the weld interface, wherein the first material has a higher thermal conductivity than the second material, and optionally wherein the first material is nickel, wherein the second material is stainless steel, and wherein the material of the assembly at the weld interface is stainless steel.

9. A method, comprising:
additively manufacturing a component (200, 300) from a first material; and
cladding a base portion of a second material onto the component (200, 300) to form a dual-material component (200, 300) for use in an assembly, wherein the first material is configured to manage heat within the assembly and wherein the second material is configured to form a weld joint between the base portion of the component (200, 300) and the assembly for joining the component (200, 300) to the assembly.

10. The method of claim 9, wherein cladding the base portion onto the component (200, 300) further comprises, applying with a cladding nozzle, the second material to the first material to grow the base portion from the component (200, 300) to manufacture the dual-material component (200, 300).

11. The method of claim 10, further comprising, machining the base portion to a predetermined geometry corresponding to a component seat within the assembly, and optionally further comprising:
installing the component (200, 300) into the component seat of the assembly; and
welding the base plate of the component (200, 300) to the assembly at the weld interface to form a weld joint to secure the component (200, 300) to the assembly.

12. The method of claim 9, wherein the first material is different from the second material, and wherein the second material is different than a material of the assembly at the weld interface and configured to form a compatible alloy with the assembly, wherein the first material has a higher thermal conductivity than the second material, and optionally . wherein the first material is nickel, wherein the second material is Inconel, and wherein the material of the assembly at the weld interface is stainless steel.

13. A system, comprising:
a housing assembly; and
an element assembly having a dual-material component (200, 300) therein, the element assembly joined within the housing assembly via a weld joint at a weld interface between the dual-material component (200, 300) and the housing assembly.

14. The system of claim 13, wherein the dual-material component (200, 300) comprises an additively manufactured component portion and a base portion, wherein the additively manufactured component portion is additively manufactured of a first material configured to manage heat within the housing assembly, and wherein the base portion is manufactured of a second material, different than the first material and compatible for welding and forming an alloy with a material of the housing assembly, wherein the first material has a higher thermal conductivity than the second material.

15. The system of claim 14, wherein the additively manufactured component portion is of nickel, wherein the base portion is of stainless steel, and wherein the housing assembly is of stainless steel, or wherein the additively manufactured component portion is of nickel, wherein the base portion is of Inconel, and wherein the housing assembly is of stainless steel.
